# EUROPEAN PATENT SPECIFICATION

(11) **EP 1 322 457 B1**
(45) Date of publication and mention of the grant of the patent: **02.08.2006**
(21) Application number: 01972280.0
(22) Date of filing: 02.10.2001
(51) Int. Cl.: B29C 45/14, G06K 19/077

(54) **MOULDING APPARATUS AND METHOD**
FORMWERKZEUG UND VERFAHREN
APPAREIL ET PROCEDE DE MOULAGE

(30) Priority: 02.10.2000 GB 0024070
(43) Date of publication of application: 02.07.2003
(73) Proprietor: Brite IP Limited, Atherstone-on-Stour Stratford-Upon-Avon Warwickshire CV37 8NE (GB)
(72) Inventor: BAGNALL, Paul, c/o Brite IP Limited, Stratford-upon-Avon, WarwickCV37 8NB (GB); SIMS, Laurie, c/o Brite IP Limited, Stratford-upon-Avon, Warwick CV37 8NB (GB); DUDDIN, Rod, c/o Brite IP Limited, Stratford-upon-Avon, Warwick CV37 8NB (GB)
(74) Representative: Gray, James
(86) International application number: PCT/GB2001/004389
(87) International publication number: WO 2002/028613

(56) References cited:
- EP-A- 0 649 719
- DE-A- 19 733 800
- US-A- 5 030 407
- US-A- 5 350 553
- US-A- 5 417 905
- PATENT ABSTRACTS OF JAPAN vol. 013, no. 425 (M-873), 21 September 1989 (1989-09-21) & JP 01 163038 A (NEC CORP), 27 June 1989 (1989-06-27)
- PATENT ABSTRACTS OF JAPAN vol. 1999, no. 04, 30 April 1999 (1999-04-30) & JP 11 011064 A (KONICA CORP), 19 January 1999 (1999-01-19)

## Description

The present invention relates to the production of plastic articles and in particular, though not exclusively, to plastic articles having embedded therein an electronic component, particularly semiconductor device, commonly referred to as a chip.

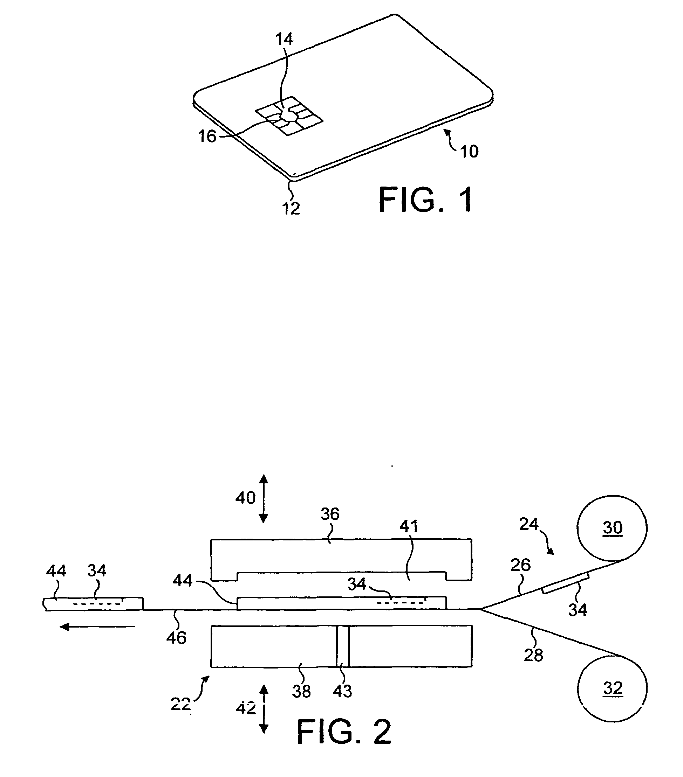

Figure 1 shows a perspective view of a smartcard generally designated 10. The card 10 comprises a planar plastic body 12 and a chip 14. The chip 14 is located in a recess in one side of the card 10 such that a face 16 of the chip lies substantially flush with said side. Typically the chip face 16 may project from the card or be recessed into the card by up to 20 microns. The body 12 typically comprises a rigid plastic core having information bearing labels bonded to opposing sides thereof.

The card 10 is typically formed by an injection moulding operation. Labels corresponding to the shape of the finished card 10, one of which labels carries the chip 14 are located in a mould. The labels may be located in the mould by any suitable means, for example electrostatically, mechanically and/or by suction. Once the labels are in place, the mould is closed and a thermoplastics material injected between the labels. The thermoplastics material, once solidified, bonds the labels thereto, and the finished card can be ejected from the mould.

The above described method is perceived to be less than ideal as precise alignment of the labels with respect to both the mould, and each other, is not always possible. When moulding a plurality of articles in a common mould, it is typically necessary to accurately position a plurality of labels which, it will be appreciated, is time consuming and increases the possibility that misalignment may occur.

US 5030407 is directed to a method of making a card which has a body having two main faces and at least one graphics element. The card is made by placing films on opposing sides of a film on one or both sides of a mould and injecting plastics material into the mould through a wall thereof. US 5350553 describes a method of producing a decorative pattern on a plastic card housing an electronic circuit in an injection moulding machine. The method utilises a ram or piston which can be used to stamp a chip onto a surface of the plastic card. US 5417905 is directed to a method for the manufacture of a plastic credit card which includes steps providing a mould having two mould shells. Plastic material is injected through one of the mould shells. A method of manufacturing a chip card is described in EP 0649719. The method includes the step of providing a carrier tape having an electronic module attached thereto and incorporating the carrier tape into the chip card during moulding thereof. JP 01163038 is directed to an apparatus for positioning printing film for multicolour moulding. The film is positioned with respect to a mould by the use of a pilot pin and a corresponding pilot hole.

According to a first aspect of the present invention a method of moulding an article incorporating an electronic component, the method comprising the steps of:
providing a mould having a mould cavity;
providing a first film having thereupon an electronic component providing a second film, one of said films having a length greater than the mould cavity;
aligning said films relative to one another such that said electronic component of said first film is disposed within the cavity;
injecting a thermoplastics material between the films to produce a moulded article incorporating said electronic component and films; and
removing said article from the mould, characterised in that the step of injecting a thermoplastic material between the films comprising the step of injecting the thermoplastic material through one of the films.

In a preferred embodiment the article is incorporated in a web formed by the films. In this manner a continuous web having a plurality of moulded articles therein may be produced. In such an embodiment, the method may include the additional steps of; moving the films relative to the mould so as to remove the article from the mould and aligning said films relative to one another across the mould cavity such that at least one of said electronic components of said first film is disposed within the cavity.

The moulding operation may then be repeated to mould another article. In a preferred embodiment both films have a length greater than that of the mould cavity. Both films may be provided with electronic components.

The method preferably includes the additional step of releasing the moulded article from the web. The article may be released by any appropriate means including, for example, a pressing, cutting and/or stamping operation. The moulded article is in a preferred embodiment planar and may include a plurality of electronic components moulded therein. In such an embodiment the first film may be configured so as to dispose more than one electronic component within the cavity prior to moulding. Additionally the second film may be provided with a plurality of spaced electronic components of which at least one is disposed within the mould cavity prior to moulding. The film may be provided with an aperture or weakened region which is alignable with an injection port of the mould.

The films may be laminar and comprise a plastic substrate having overlying printing ink and lacquer layers. The printing ink layer preferably conveys information in the form of lettering or images. In an alternative embodiment the films may comprise a plastic substrate, a plastic scuff layer and a layer of printing ink therebetween. Taking the example where the mould is configured so as to produce a planar article from which one or more further articles are released by a cutting operation, the printing ink layer is preferably configured so as to provided regions of ink corresponding to in size and shape to said further articles. In a preferred embodiment the or each printing ink region covers an area slightly larger than that of the article to be released by said cutting operation.

The electronic component may be received in a recess of the first film, for example a through hole. Alternatively the electronic components may overlie an external surface of the first film. The electronic device may be attached to the film by adhesive. The electronic component may be a semiconductor device.

The first film may include one or more antennae in electrical contact with the semiconductor device. The antennae may be formed by a layer of electrically conductive ink applied to the first film. In such an embodiment the semiconductor device may be attached to the first film using an electrically conductive adhesive. In an alternative embodiment the semiconductor device may be attached using a non-conductive adhesive. In such an embodiment the semiconductor may be arranged so as to be brought into electrical contact with the antenna during moulding of the article. In such an embodiment electrical contact may be achieved by mechanical pressure exerted on the film and semiconductor device in the mould during moulding.

The step of aligning the films preferably utilises an alignment member of the mould, and comprises the step of moving said alignment member into contact with alignment features of the films. Said alignment features may comprises apertures of the films.

According to a second aspect of the present invention there is provided a mould for use in moulding an article, the mould comprising two mould members movable relative to one another, the mould having an injection port for the injection of a thermoplastics material and a recess defining a mould cavity, the mould being arranged to receive two films, the films being incorporated into an article during moulding, wherein the mould includes alignment means operable to align said films relative to the mould members prior to moulding of an article, the alignment means being provided between the mould members and remote from the mould cavity, wherein the alignment means comprise a projection of one of the mould members and a spring biased seat of the other of the mould members.

Preferably alignment of the films is achieved by the projection being received in alignment recesses of the films, with engagement of the sides of said recesses with said projection serving to move the films into a desired alignment.

In a preferred embodiment the seat is in the form of a cylinder. The seat may be spring biased by any appropriate means, for example one or more a mechanical springs or, alternatively, by the application of fluid pressure. The projection may be tapered. In a preferred embodiment the projection has a tapered fore portion and a substantially parallel aft portion.

The mould may be provided with a plurality of mould cavities linked by channels adapted to guide plastics material to the cavities during moulding. In such an embodiment the injection port is preferably aligned with one or more of said guide channels.

According to a third aspect of the present invention there is provided an electronic component carrying means for use in the moulding of articles incorporating a electronic component, said carrying means forming a surface layer of said article during moulding and comprising an elongate film having a spaced plurality of electronic components provided thereon, characterised in that the film includes an aperture alignable, in use, with a mould injection port. In a preferred embodiment the length of the carrying means is greater than the mould cavity and the carrying means may have a width greater than that of the mould cavity. The electronic components may be semiconductor devices.

In a preferred embodiment the carrying means is a plastics material. The carrying means may be laminar, for example comprising a plastic substrate having overlying printing ink and lacquer layers. The printing ink layer preferably conveys information in the form of lettering or images. In an alternative embodiment the carrying means may comprise a plastic substrate, a plastic scuff layer and a layer of printing ink therebetween.

The semiconductor devices may be received in a recess of the carrying means for example a through hole. Alternatively the semiconductor devices may overlie an external surface of the carrying means and may be attached to the carrying means by adhesive. The carrying means may also be provided with one or more apertures alignable, in use, with an injection port of a mould. In an alternative embodiment the carrying means may be provided with one or more weakened regions alignable, in use , with an injection port of a mould.

The carrying means may include one or more antennae in electrical contact with the or each semiconductor device. The antennae may be formed by a layer of electrically conductive ink applied to the carrying means In such an embodiment the or each semiconductor device may be attached to the carrying means using an electrically conductive adhesive. In an alternative embodiment the or each semiconductor device may be attached using a non-conductive adhesive. In such an embodiment the semiconductor may be arranged so as to be brought into electrical contact with the antenna during moulding a moulding operation. In such an embodiment electrical contact may be achieved by mechanical pressure exerted on the carrying means and semiconductor devices in the mould during moulding.

Embodiments of the present invention will now be described with reference to the accompanying drawings in which:
Figure 1 shows a perspective view of a smartcard;
Figure 2 shows a diagrammatic side view of a moulding apparatus according to an aspect of the present invention;
Figure 3 shows a cross-sectional view of a mould according to an aspect of the present invention;
Figure 4 shows a cross-sectional view of a first embodiment of a chip carrying film;
Figure 5 shows a cross-sectional view of a second embodiment of a chip carrying film;
Figure 6 shows a cross-sectional view of a third embodiment of a chip carrying film;
Figure 7 shows a plan view of an antenna configuration;
Figure 8 shows a cross-sectional view of a fourth embodiment of a chip carrying film;
Figure 9 shows a cross-sectional view of a fifth embodiment of a chip carrying film;
Figure 10 shows a cross-sectional view of a sixth embodiment of a chip carrying film;
Figure 11 shows perspective view of a film configuration;
Figure 12 shows a perspective view of an alternative film configuration; and
Figure 13 shows a perspective view of smartcards moulded according to the present invention;

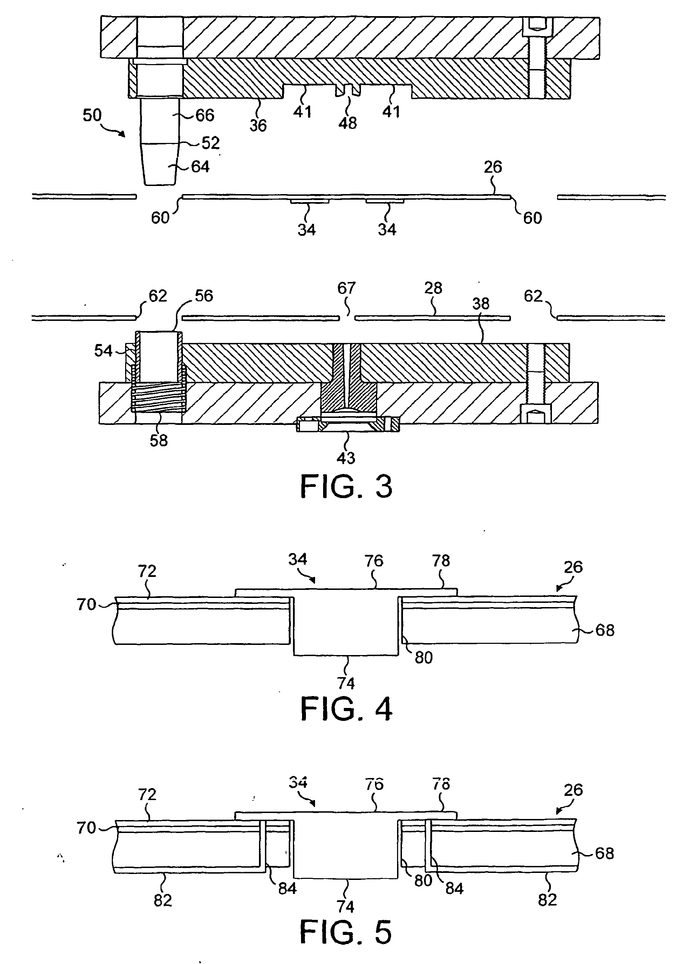

Referring firstly to figures 2 and 3 there is shown a moulding apparatus for the moulding of articles, for example smartcards. The apparatus comprises a mould 22 and feed means 24 adapted to supply elongate films 26,28 to the mould 22 in a substantially continuous manner. In the embodiment the films 26,28 are stored on reels 30,32, however it will be understood that the films 26,28 may be stored in any appropriate manner. In the embodiment shown the upper reel 30 is loaded with film 26 having attached thereto a plurality of spaced chips 34. The lower reel 32 is loaded with film 28 which does not have chips attached thereto The constitution of the films 26,28 will be discussed in greater detail below.

The term "chip" is intended to cover various semiconductor devices which may be incorporated in a moulded article. The chip may comprises an etched silicon wafer which is mounted in a housing prior attachment to a film. Alternatively the chip may be of the type commonly referred to as a "flip chip". A flip chip comprises an etched silicon wafer which may be affixed directly to a substrate without the need for a holder. The semiconductor device may be arranged so as to provide a desired function in the moulded article. Taking the example of a smart card, the semiconductor device may be adapted to store information relating to the holder of the card. The moulded article may take the form of a telecommunications SIM card of the type adapted to be fitted to a mobile phone apparatus, and thus the semiconductor device may be adapted to store such information as text messages and telephone numbers. In yet a further embodiment the moulded article may define a memory card for an apparatus such as a digital camera. Accordingly the semiconductor device may be adapted to store digital image data for later retrieval.

As an alternative to chips, the present invention may also be utilised for the moulding of one or more electronic components including, but not limited to resistors, capacitors, inductors, transistors and the like.

The mould 22 comprises upper and lower mould halves 36,38 which are movable towards and away from one another (arrows 40,42). The upper half 36 is provided with a recess which, in use defines a mould cavity 41, while the lower half 38 is provided with an injection port 43.

In use, the films 26,28 are advanced into the mould 22 until a desired film alignment with respect to the mould 22 is achieved. The mould halves 36,38 are then brought together to close the mould 22 and a thermoplastics material is injected into the cavity 41 via the injection port 43. The plastics material is injected between the films 26,28 as the film 28 resting against the lower mould half 38 is provided with an aperture or weakened region which, in use is aligned with the injection port 43. The introduction of the plastics material between the films 26,28 urges the films 26,28 against their respective mould halves 36,38. The plastics material bonds the films 26,28 thereto and encapsulates the chip 34 to form a moulded article 44, in this case a smartcard, corresponding to the shape of the mould cavity 41. In the simplified embodiment shown, the mould 22 and films 26, 28 are configured so as to manufacture a single smartcard per moulding operation. However, it will be understood that the mould 22 may have alternative configurations. For example, the mould 22 and films 26, 28 may be configured so as to produce a planar tile or blank having a plurality of smartcards encapsulated therein. The smartcards may subsequently released by an appropriate cutting operation.

Once the plastics material has cooled and is dimensionally stable, the mould 22 can be opened and the moulded article 44 removed. The mould 22 and films 26,28 are configured such that the moulded article 44 is retained in a web 46 formed by the films 26,28. It will thus be understood that an elongate web 46 having multiple moulded articles 44 retained therein can be produced. The web 46 and moulded articles 44 can be forwarded from the mould 22 in a substantially continuous manner for further processing.

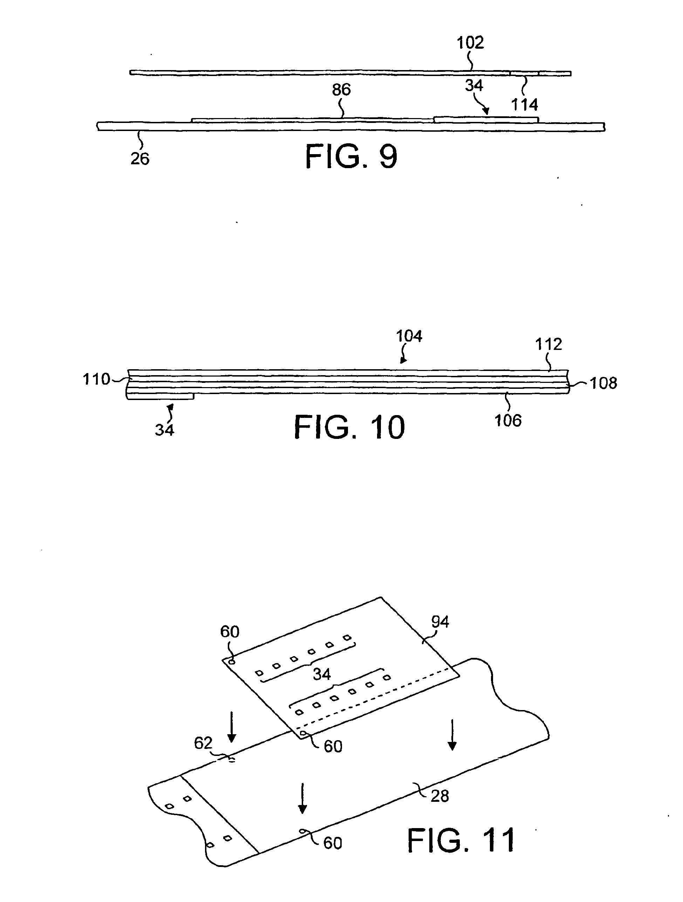

In the embodiment of shown in figure 2 both films 26, 28 are provided on reels however, as noted above, other storage and delivery methods may be used. Referring to figure 11 there is shown a perspective view of an alternative film arrangement comprising a elongate film 28 of the type which may be stored on a reel and a discrete planar film portion 94 carrying a plurality of semiconductor devices 34. The planar film 94 is attached to the elongate film 28 prior to both films 28,94 being introduced into the mould 20. Attachment of the films may be accomplished by any appropriate means, for example by tack welding or ultrasonic welding at the corners of the planar film 94. In this way the films 28, 94 are associated with one another but are able to separate, either wholly or partially, during the subsequent moulding operation. The films 28, 94 include alignment apertures 60, 62 which locate the films 28, 94 relative to the mould 20 as is described below, but which may also be utilised for alignment purposes when the films 28, 94 are attached to one another. In an alternative embodiment the film portion 94 may be shorter than the length of the mould cavity.

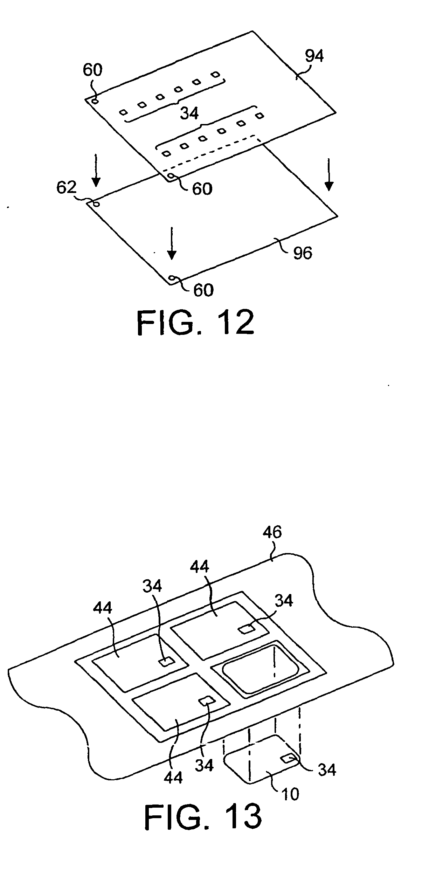

Figure 12 shows a perspective view of yet a further alternative arrangement wherein the films comprise two discrete planar film portions 94, 96 one of which carries a plurality of semiconductor devices 34. As before these films 94, 96 may be attached to one another prior to their introduction to the mould 20. It will be understood that the length of the films 94, 96 is greater than the corresponding dimensions of the mould. As described above the films 94,96 may be attached to one another prior to insertion into the mould 20. While it will be appreciated that the utilisation of discrete films 94,96 of this type would not enable the provision of a plurality of successive moulded articles in a substantially continuous web, automated feed and delivery systems may be associated with the mould 20 which introduce the film pairs 94, 96 at the same time as removing a previously moulded article.

Referring now to figure 3 there is shown a more detailed view of the mould 22. As before, the mould 22 comprises two halves 36,38 which are provided respectively with a cavity 41 and an injection port 43. In the embodiment shown the mould 22 is provided with two cavities 41 which are offset laterally with respect to the injection port 43. The mould 22 is further provided with a guide channel 48 aligned with the injection port 43, which guide channel 48 conveys the plastics material to the cavities 41, in use. In this manner the point of injection does not form part of an article formed in a mould cavity 41.

In an alternative embodiment the mould 22 may be provided with a single cavity configured so as to produce a single, substantially planar article. In such an embodiment it will be understood that guide channels are not required. Where it is desired to subsequently cut one or more further articles from such a planar article, then the mould is preferably configured such that the injection port is remote from where, in the moulded planar article, said further articles are to be cut.

The mould 22 is further provided with alignment means, generally designated 50, which ensure the correct alignment of the films 26,28 with respect to the mould 22. The alignment means 50 are positioned close to an edge of the mould and thus are remote from the cavities 41. The alignment means comprise a tapered pin 52 of one of the mould halves 36 which is receivable in a recess 54 of the other of the mould halves 38. The recess 54 includes a cylindrical bush 56 which is retained in the mould half 38. The bush 56 is biased outwardly from the mould half 38 by a coil spring 58. It will be understood that any suitable biasing means may be utilised, for example pneumatic means.

In use, the pin 52 co-operates with apertures 60,62 of the films 26,28 to align the films 26,28 with respect to the mould 22. As the mould halves 36,38 are brought together, the tapered fore portion 64 of the pin 52 engages the film apertures 60,62. Continued closing movement of the mould halves 36,38 moves the film apertures 60,62 to the parallel portion 66 of the pin 52 thus eliminating any misalignment between the films 26,28 and mould 22. Alignment means 50 ensure that an injection aperture 67 of the lower film 28 is aligned with the injection port 43 so as to enable injection of plastics material between the films 26,28.

Figures 4 to 6, 8 to 10 show six embodiments of chip carrying films 26 adapted for use with the present invention. In figure 4 there is shown a film 26 suitable for producing a smartcard of the contact card type. The film 26 has a three layer construction comprising a plastic substrate 68 upon which is provided a layer of printing ink 70 and a layer of clear lacquer 72. The film 26 has a typical thickness of around 57 microns The chip 34 comprises a body 74 having a contact pad 76 provided thereon. As can be seen, the chip 34 in cross-section is essentially "T" shaped with the contact pad 76 being wider then the body 74 and defining a flange portion 78 . The chip 34 is received in a through hole 80 of the film 26 such that the flange portion 78 rests against the lacquer layer 72. The chip 34 is retained in the through hole 80 by the use of a suitable adhesive on the underside of the flange portion 78.

Figure 5 shows a film 26 suitable for producing a smartcard of the combi card type. As before the film 26 comprises layers of plastic 68, printing ink 70 and lacquer 72 and a chip 34 provided in a through hole 80. The film 26 further includes a layer of conductive ink 82 on the underside of the plastic layer 68. The conductive ink is configured so as to define an antenna which, in use, is incorporated in a card moulded from the film 26. The antenna is connected to the chip 34 via additional through apertures 84 of the film 26 which communicate with the underside of the flange portion 78 and are filled with conductive ink. In this embodiment the chip is retained to the film 26 by the use of electrically conductive adhesive on the underside of the flange portion 78.

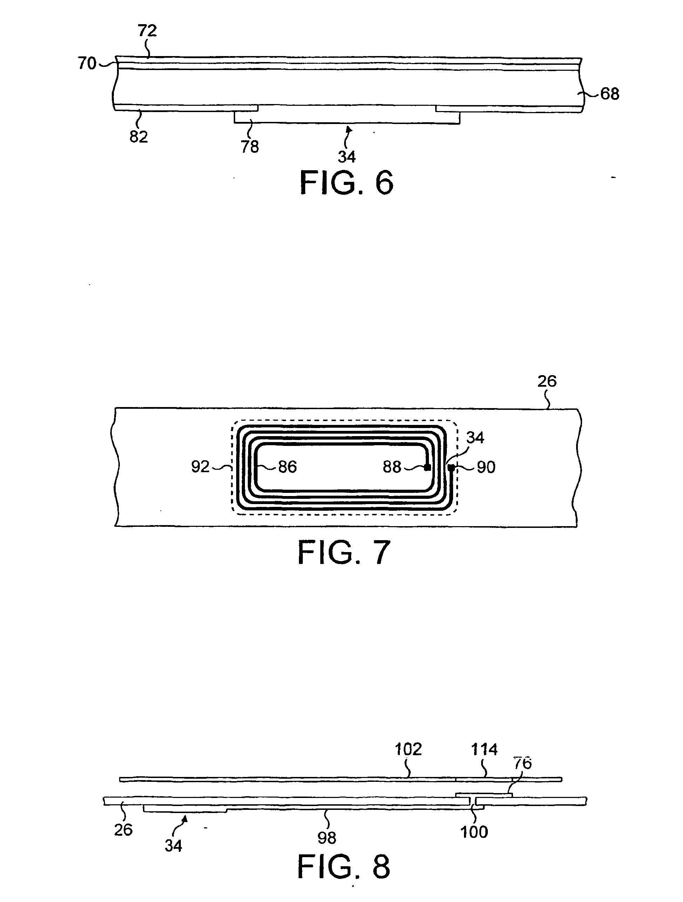

Figure 6 shows a third embodiment of a film 26 adapted for use in producing smartcards of the contactless type. Here the film 26 again comprises the three layers of plastic 68, printing ink 70 and lacquer 72, however the chip 34 is attached to the underside of the plastic layer 68 rather than being received in a through hole. The chip 34 is again provided with a flange portion 78, however this overlies a layer of conductive ink 82 defining an antenna on the underside of the plastic layer 68. As before, the chip 34 is retained to the film 26 by the provision of an electrically conductive adhesive.

Figure 8 shows a fourth embodiment of a film 26 adapted for use in producing a smart card of the contact card type where the contact pad 76 is spaced from, and provided on the opposite side of the film 26 from, the chip 34. The chip 34 is affixed to the underside of the film 26 and is connected to a conductive strip 98 provided on the film 26. The strip 98 may comprise a strip of conductive metal, such as copper, which has been deposited on the film by an etching operation. The contact pad 76 is provided on the opposite side of the film 26 and advantageously may also be deposited on the film by an etching operation. The contact pad 76 and conductive strip 98 are connected via a portion of electrically conductive material 100 extending therebetween through the film 26. Although not shown the film 26 may be provided with the aforementioned ink and lacquer layers.

As an alternative to the provision of ink and lacquer layers applied to the film 26, a printed adhesive label 102 may be applied to the film prior to moulding of an article. The label 102 may carry wording and/or images which will be present on the outer surface of the moulded article. The label 102 may also serve to obscure an antenna, conductive strip, electronic component or combination thereof carried by the film and which might otherwise be visible in the moulded article. In the embodiment shown the label 102 includes a window or aperture 114 which, in use, surrounds the contact pad 76. It will be under stood that such labels 102 may be provided on both films.

Figure 9 shows a fifth embodiment of a film 26. Here the chip 34 and an antenna 86 are provided on the outer side of the film 26 and which are adapted to be covered with an adhesive label 102 prior to moulding of an article. The label serves to both protect the chip 34 and antenna 86 and to display information on the moulded article without the need to print directly to the film 26. The label 102 is provided with an aperture 114 which, in use, overlies a portion of the chip 34. The aperture may thus allow access to the surface of the chip in the moulded article. It will be understood that the aperture 114 may be positioned such that it overlies contact pads associated with the chip or a portion of a metal layer applied to the film 26.

Figure 10 shows a sixth embodiment of a film, generally designated 104. The film 104 comprises an etched layer of metal 106, such as copper and defining an antenna or electrical conduction path, an adhesive layer 108, a printing ink layer 110 and a polyester film layer 112. The polyester film layer 112 is arranged so as to, in use, comprise the outer surface of the moulded article. The ink layer 110 is applied to polyester layer before application of the adhesive layer 108 The adhesive layer 108 is opaque so as to provide a background against which the ink layer 110 may be viewed. A layer 106 of metal is then applied to the adhesive, which layer 106 is then etched to provide a desired configuration. The adhesive layer 108 serves to protect the ink layer 110 during the etching process. A chip 34 may be applied to the metal layer 106 in any appropriate manner as required.

Figure 7 shows a spiral-like arrangement for an antenna 86 printed on a film 26, the chip 34 being positioned so as to bridge the ends 88,90 thereof. The antenna 86 is shown to follow the shape, as indicated by broken line 92, of card which may be produced from the film 26. The antenna 86 may be provided on the film by any appropriate means. For example, and as described above, the antenna 86 may be printed onto the film 26. Alternatively the antenna 86 may be deposited on the film by an etching operation. In such an operation a thin layer of metal is affixed by adhesive to the film and the required form of the antenna masked by an appropriate masking agent. The unmasked metal is then removed in an known manner. In yet a further embodiment metal forming an antenna may be deposited on the film by an electroplating operation. Here the form of the antenna may be printed on the film with an ink commonly referred to as a seeding ink. During a subsequent plating operation metal is deposited on the seeding ink. In such plating and etching embodiments the antenna 86 comprises a thin layer of a conductive metal such as, for example, aluminium, copper or a combination of the two. Alternatively the metal layer may have an alternative function to that of an antenna. For example the metal layer may function as a heating element.

It will be understood that the chip free second film 28 which is utilised in the present invention has a similar construction to that of the chip film 26, for example a three ply laminate of a plastic substrate with overlying ink and lacquer layers. The use of films 26,28 having similar properties has the effect of balancing out shrinkage stresses experienced by the card during moulding.

Figure 13 shows a perspective view of a web 46 having incorporated therein four moulded articles 44 or blanks having chips 34 embedded therein. A cutting, stamping or punching operation may be utilised so as to produce a smartcard 10 from each blank 44. It will be appreciated that the blank 44 is slightly larger than the smartcard 10 formable therefrom. Accordingly any printed images carried on the films 26,28 and intended to be displayed upon the smartcard can be similarly oversized. This ensures that, when a smartcard 10 is punched from the blank 44, each side is fully decorated.

While the above described embodiments relate to the manufacture of articles incorporating a semiconductor device or chip, it will be appreciated that the moulding method is equally applicable to the manufacture of chipless articles wherein the films are incorporated into surfaces of a moulded article. It will further be appreciated that both films may be provided one or more semiconductor devices, and hence articles having a semiconductor device in or on opposing faces may be moulded.

## Claims

1. A method of moulding an article (44) incorporating an electronic component (34), the method comprising the steps of:
providing a mould (22) having a mould cavity (41);
providing a first film (26) having thereupon an electronic component (34); providing a second film (28), one of said films (26,28) having a length greater than the mould cavity (41);
aligning said films (26,28) relative to one another such that said electronic component (34) of said first film (26) is disposed within the cavity (41);
injecting a thermoplastics material between the films (26,28) to produce a moulded article (44) incorporating said electronic component (34) and films (26,28); and
removing said article (44) from the mould (22), **characterised in that** the step of injecting a thermoplastic material between the films comprising the step of injecting the thermoplastic material through one of the films (26,28).

2. A method as claimed in claim 1 wherein both films (26,28) have a length greater than the mould cavity (41).

3. A method as claimed in claim 1 or claim 2 wherein the first film (26) is provided with a plurality of electronic components (34), and the films (26,28) are aligned relative to one another across the mould cavity (41) such that at least one of said electronic components (34) is disposed within the cavity (41).

4. A method as claimed in any of claims 1 to 3 wherein the or each electronic component (34) overlies an external surface of the first film (26).

5. A method as claimed in any preceding claim wherein the or each electronic component (34) is attached to the film (26) by adhesive.

6. A method as claimed in any preceding claim wherein the first film (26) includes one or more antennae (82,86) in electrical contact with the or each electronic component (34).

7. A method as claimed in claim 6 wherein the or each antennae (82,86) is formed by a layer of electrically conductive ink applied to the first film (26).

8. A method as claimed in claim 6 wherein the or each antennae (82,86) is formed by a layer of electrically conductive metal provided on the first film (26).

9. A method as claimed in any preceding claim wherein the step of aligning the films (26,28) utilises an alignment member (52) of the mould (22), and comprises the step of moving said alignment member (52) into contact with alignment features (62) of the films.

10. A method as claimed in any preceding claim wherein the elongate films (26,28) comprise two planar films (26,28).

11. A method as claimed in claim 10 wherein the films (26,28) are connected to one another prior to their alignment in the mould cavity (41).

12. A method as claimed in any preceding claim wherein said electronic component (34) is a semiconductor device.

13. A mould (22) for use in moulding an article, the mould comprising two mould members (36,38) movable relative to one another, the mould (22) having an injection port (43) for the injection of a thermoplastics material and a recess defining a mould cavity (41), the mould (22) being arranged to receive two films (26,28), the films (26,28) being incorporated into an article (44) during moulding, wherein the mould (22) includes alignment means (50) operable to align said films (26,28) relative to the mould members (36,38) prior to moulding of an article (44), the alignment means (50) being provided between the mould members (36,38) and remote from the mould cavity (41), wherein the alignment means (50) comprise a projection (52) of one of the mould members (36,38) and a spring biased seat (56) of the other of the mould members (36,38).

14. A electronic component carrying means for use in the moulding of articles (44) incorporating a electronic component (34), said carrying means forming a surface layer of said article (44) during moulding and comprising an elongate film (26) having a spaced plurality of electronic components (34) provided thereon, **characterised in that** the film (26) includes an aperture (67) alignable, in use, with a mould injection port (43).

15. A carrying means as claimed in claim 14 wherein the film (26) is a plastics material.

16. A carrying means as claimed in claim 15 wherein the film (26) comprises a plastic substrate having overlying printing ink and lacquer layers.

17. A carrying means as claimed in any of claims 14 to 16 wherein the electronic components (34) overlie an external surface of the film (26) and are attached to the film (26) by adhesive.

18. A carrying means as claimed in any of claims 14 to 17 wherein the carrying means include one or more antennae (82,86) in electrical contact with the electronic components (34).

19. A carrying means as claimed in claim 18 wherein said one or more antennae (82,86) is formed by a layer of electrically conductive ink applied to the film (26).

20. A carrying means as claimed in claim 18 wherein the or each antennae (82,86) is formed by a layer of electrically conductive metal provided on the film (26).

21. A carrying means as claimed in any of claims 14 to 21 wherein said electronic components (34) are semiconductor devices.

## Patentansprüche

1. Verfahren zum Formen eines Gegenstands (44), der eine Elektronikkomponente (34) enthält, wobei das Verfahren die folgenden Schritte umfaßt:
Bereitstellen eines Werkzeugs (22) mit einem Werkzeughohlraum (41);
Bereitstellen eines ersten Films (26) mit einer darauf angebrachten Elektronikkomponente (34);
Bereitstellen eines zweiten Films (28), wobei einer der Filme (26, 28) eine Länge aufweist, die größer ist als der Werkzeughohlraum (41);
Ausrichten der Filme (26, 28) relativ zueinander derart, daß die Elektronikkomponente (34) des ersten Films (26) in dem Hohlraum (41) angeordnet ist;
Einspritzen eines Thermoplastmaterials zwischen die Filme (26, 28), um einen geformten Gegenstand (44) zu produzieren, der die Elektronikkomponente (34) und Filme (26, 28) enthält; und
Entfernen des Gegenstands (44) aus dem Werkzeug (22), **dadurch gekennzeichnet, daß** der Schritt des Einspritzens eines thermoplastischen Materials zwischen die Filme den Schritt des Einspritzens des thermoplastischen Materials durch einen der Filme (26, 28) umfaßt.

2. Verfahren nach Anspruch 1, wobei beide Filme (26, 28) eine Länge aufweisen, die größer ist als der Werkzeughohlraum (41).

3. Verfahren nach Anspruch 1 oder 2, wobei der erste Film (26) mit mehreren Elektronikkomponenten (34) versehen ist und die Filme (26, 28) relativ zueinander über den Werkzeughohlraum (41) hinweg derart ausgerichtet sind, daß mindestens eine der Elektronikkomponenten (34) in dem Hohlraum (41) angeordnet ist.

4. Verfahren nach einem der Ansprüche 1 bis 3, wobei die oder jede Elektronikkomponente (34) eine äußere Oberfläche des ersten Films (26) überdeckt.

5. Verfahren nach einem der vorhergehenden Ansprüche, wobei die oder jede Elektronikkomponente (34) durch Kleber an dem Film (26) angebracht wird.

6. Verfahren nach einem der vorhergehenden Ansprüche, wobei der erste Film (26) eine oder mehrere Antennen (82, 86) in elektrischem Kontakt mit der oder jeder Elektronikkomponente (34) enthält.

7. Verfahren nach Anspruch 6, wobei die oder jede Antenne (82, 86) durch eine auf den ersten Film (26) aufgebrachte Schicht aus elektrisch leitender Tinte ausgebildet wird.

8. Verfahren nach Anspruch 6, wobei die oder jede Antenne (82, 86) durch eine auf dem ersten Film (26) vorgesehene Schicht aus elektrisch leitendem Metall ausgebildet wird.

9. Verfahren nach einem der vorhergehenden Ansprüche, wobei der Schritt des Ausrichtens der Filme (26, 28) ein Ausrichtglied (52) des Werkzeugs (22) nutzt und den Schritt des Bewegens des Ausrichtglieds (52) in Kontakt mit Ausrichtmerkmalen (62) der Filme umfaßt.

10. Verfahren nach einem der vorhergehenden Ansprüche, wobei die länglichen Filme (26, 28) zwei planare Filme (26, 28) umfassen.

11. Verfahren nach Anspruch 10, wobei die Filme (26, 28) vor ihrer Ausrichtung in dem Werkzeughohlraum (41) miteinander verbunden werden.

12. Verfahren nach einem der vorhergehenden Ansprüche, wobei die Elektronikkomponente (34) ein Halbleiterbauelement ist.

13. Werkzeug (22) zur Verwendung beim Formen eines Gegenstands, wobei das Werkzeug zwei Werkzeugglieder (36, 38) umfaßt, die relativ zueinander bewegt werden können, wobei das Werkzeug (22) einen Spritzgußanschluß (43) für das Einspritzen eines thermoplastischen Materials und eine einen Werkzeughohlraum (41) definierende Vertiefung aufweist, wobei das Werkzeug (22) so ausgelegt ist, daß es zwei Filme (26, 28) aufnimmt, wobei die Filme (26, 28) während des Formens in einen Gegenstand (44) eingearbeitet werden, wobei das Werkzeug (22) Ausrichtmittel (50) enthält, die betätigt werden können, um die Filme (26, 28) vor dem Formen eines Gegenstands (44) relativ zu den Werkzeuggliedern (36, 38) auszurichten, wobei die Ausrichtmittel (50) zwischen den Werkzeuggliedern (36, 38) und vom Werkzeughohlraum (41) entfernt vorgesehen sind, wobei die Ausrichtmittel (50) einen Vorsprung (52) an einem der Werkzeugglieder (36, 38) und einen federbelasteten Sitz (56) am anderen Werkzeugglied (36, 38) umfassen.

14. Elektronikkomponententragemittel zur Verwendung beim Formen von Gegenständen (44), die eine Elektronikkomponente (34) enthalten, wobei die Tragemittel eine Oberflächenschicht des Gegenstands (44) während des Formens bilden und einen länglichen Film (26) mit beabstandeten mehreren darauf vorgesehenen Elektronikkomponenten (34) umfassen, **dadurch gekennzeichnet, daß** der Film (26) eine Öffnung (67) enthält, die bei Verwendung auf einem Werkzeugeinspritzanschluß (43) ausgerichtet werden kann.

15. Tragemittel nach Anspruch 14, wobei der Film (26) ein Kunststoffmaterial ist.

16. Tragemittel nach Anspruch 15, wobei der Film (26) ein Kunststoffsubstrat mit darüberliegenden gedruckten Tinten- und Lackschichten umfaßt.

17. Tragemittel nach einem der Ansprüche 14 bis 16, wobei die Elektronikkomponenten (34) eine äußere Oberfläche des Films (26) überdecken und durch Kleber auf dem Film (26) aufgebracht sind.

18. Tragemittel nach einem der Ansprüche 14 bis 17, wobei die Tragemittel eine oder mehrere Antennen (82, 86) in elektrischem Kontakt mit den Elektronikkomponenten (34) enthalten.

19. Tragemittel nach Anspruch 18, wobei die eine oder mehreren Antennen (82, 86) durch eine auf den Film (26) aufgebrachte Schicht aus elektrisch leitender Tinte gebildet ist.

20. Tragemittel nach Anspruch 18, wobei die oder jede Antenne (82, 86) durch eine auf dem Film (26) vorgesehene Schicht aus elektrisch leitendem Metall gebildet ist.

21. Tragemittel nach einem der Ansprüche 14 bis 21, wobei die Elektronikkomponenten (34) Halbleiterbauelemente sind.

## Revendications

1. Procédé de moulage d'un objet (44) dans lequel un composant électronique (34) est incorporé, le procédé comprenant les étapes qui consistent à:
prévoir un moule (22) comportant une cavité de moule (41);
prévoir un premier film (26) sur lequel le composant électronique (34) est disposé;
prévoir un second film (28), l'un desdits films (26, 28) ayant une longueur supérieure à celle de la cavité (41) du moule;
aligner lesdits films (26, 28) l'un par rapport à l'autre de façon que ledit composant électronique (34) dudit premier film (26) soit disposé à l'intérieur de la cavité (41);
injecter une matière thermoplastique entre les films (26, 28) pour produire un objet moulé (44) dans lequel ledit composant électronique (34) et lesdits films (26, 28) sont incorporés; et
extraire ledit objet (44) du moule (22), **caractérisé en ce que** l'étape d'injection d'une matière thermoplastique entre les films comprend l'étape qui consiste à injecter la matière thermoplastique à travers l'un des films (26, 28).

2. Procédé tel que défini dans la revendication 1, dans lequel les deux films (26, 28) ont une longueur supérieure à celle de la cavité (41) du moule.

3. Procédé tel que défini dans la revendication 1 ou la revendication 2, dans lequel le premier film (26) est pourvu de plusieurs composants électroniques (34), les films (26, 28) étant alignés l'un par rapport à l'autre en travers de la cavité (41) du moule de façon que l'un au moins desdits composants électroniques (34) soit disposé à l'intérieur de la cavité (41).

4. Procédé tel que défini dans l'une quelconque des revendications 1 à 3, dans lequel chaque composant électronique (34) recouvre une surface extérieure du premier film (26).

5. Procédé tel que défini dans l'une quelconque des revendications précédentes, dans lequel chaque composant électronique (34) est fixé au film (26) par un adhésif.

6. Procédé tel que défini dans l'une quelconque des revendications précédentes, dans lequel le premier film (26) comprend une ou plusieurs antennes (82, 86) en contact électrique avec chaque composant électronique (34) .

7. Procédé tel que défini dans la revendication 6, dans lequel chaque antenne (82, 86) est formée par une couche de pâte électriquement conductrice appliquée au premier film (26).

8. Procédé tel que défini dans la revendication 6, dans lequel chaque antenne (82, 86) est formée par une couche de métal électriquement conducteur prévue sur le premier film (26).

9. Procédé tel que défini dans l'une quelconque des revendications précédentes, dans lequel l'étape d'alignement des films (26, 28) utilise un élément d'alignement (52) du moule (22), et comprend l'étape qui consiste à déplacer ledit élément d'alignement (52) pour l'amener en contact avec des motifs d'alignement (62) des films.

10. Procédé tel que défini dans l'une quelconque des revendications précédentes, dans lequel les films allongés (26, 28) comprennent deux films plans (26, 28).

11. Procédé tel que défini dans la revendication 10, dans lequel les films (26, 28) sont reliés l'un à l'autre préalablement à leur alignement dans la cavité (41) du moule.

12. Procédé tel que défini dans l'une quelconque des revendications précédentes, dans lequel ledit composant électronique (34) est un dispositif à semi-conducteur.

13. Moule (22) destiné à être utilisé pour mouler un objet, le moule comprenant deux éléments de moule (36, 38) mobiles l'un par rapport à l'autre, le moule (22) comportant un orifice d'injection (42) pour permettre l'injection d'une matière thermoplastique et un creux définissant une cavité de moule (41), le moule (22) étant conçu pour recevoir deux films (26, 28), films (26, 28) qui sont incorporés dans un objet (44) pendant le moulage, le moule (22) comprenant des moyens d'alignement (50) aptes à agir pour aligner lesdits films (26, 28) par rapport aux éléments (36, 38) du moule avant le moulage d'un objet (44), les moyens d'alignement (50) étant disposés entre les éléments (36, 38) du moule et à distance de la cavité (41) du moule, les moyens d'alignement (50) comprenant une protubérance (52) de l'un des éléments (36, 38) du moule et un logement sollicité par ressort (56) de l'autre des éléments (36, 38) du moule.

14. Moyen de support de composant électronique destiné à être utilisé pour mouler des objets (44) dans lesquels un composant électronique (34) est incorporé, ledit moyen de support formant une couche de surface dudit objet (44) pendant le moulage et comprenant un film allongé (26) sur lequel sont disposés plusieurs composants électroniques (34) espacés, **caractérisé en ce que** le film (26) comprend un trou (67) qui, en service, peut être aligné avec un orifice d'injection (43) du moule.

15. Moyen de support tel que défini dans la revendication 14, dans lequel le film (26) est une matière plastique.

16. Moyen de support tel que défini dans la revendication 15, dans lequel le film (26) comprend un substrat en matière plastique recouvert par des couches de pâte d'impression et de laque.

17. Moyen de support tel que défini dans l'une quelconque des revendications 14 à 16, dans lequel les composants électroniques (34) recouvrent une surface extérieure du film (26) et sont fixés à ce dernier par un adhésif.

18. Moyen de support tel que défini dans l'une quelconque des revendications 14 à 17, dans lequel le moyen de support comprend une ou plusieurs antennes (82, 86) en contact électrique avec les composants électroniques (34).

19. Moyen de support tel que défini dans la revendication 18, dans lequel ladite ou lesdites antennes (82, 86) sont formées par une couche de pâte électriquement conductrice appliquée au film (26).

20. Moyen de support tel que défini dans la revendication 18, dans lequel chaque antenne (82, 86) est formée par une couche de métal électriquement conducteur disposée sur le film (26).

21. Moyen de support tel que défini dans l'une quelconque des revendications 14 à 21, dans lequel lesdits composants électroniques (34) sont des dispositifs à semi-conducteur.
